# FASCICULE DE BREVET EUROPEEN

(11) **EP 3 319 826 B1**
(45) Date de publication et mention de la délivrance du brevet: **19.06.2019**
(21) Numéro de dépôt: 16750931.4
(22) Date de dépôt: 07.07.2016
(51) Int. Cl.: B60J 5/04, B60Q 1/32

(54) **ELÉMENT STRUCTUREL D'UNE CAISSE D'UN VÉHICULE AUTOMOBILE COMPRENANT UN MODULE INTERCHANGEABLE**
STRUKTURELEMENT EINER KRAFTFAHRZEUGKAROSSERIE MIT EINEM AUSTAUSCHBAREN MODUL
MOTOR VEHICLE BODY SHELL STRUCTURAL ELEMENT COMPRISING AN INTERCHANGEABLE MODULE

(30) Priorité: 09.07.2015 FR 1556491
(43) Date de publication de la demande: 16.05.2018
(73) Titulaire: Renault S.A.S., 92100 Boulogne-Billancourt (FR)
(72) Inventeur: BEZEAULT, Loic, 78150 Le Chesnay (FR); CHEVALIER, Maxime, 78960 Voisins Le Bretonneux (FR); HEWAK, Gregor, 95490 Vaureal (FR)
(86) Numéro de dépôt international: PCT/FR2016/051727
(87) Numéro de publication internationale: WO 2017/006061

(56) Documents cités:
- DE-A1- 3 908 995
- DE-A1-102011 016 403
- GB-A- 1 168 352
- JP-A- 2011 218 856
- JP-U- S58 113 522

## Description

### Domaine technique de l'invention

L'invention concerne les éléments de structure d'une caisse d'un véhicule automobile.

L'invention concerne plus particulièrement un élément structurel destiné à être assemblé à une caisse d'un véhicule, notamment du type d'une automobile, ledit élément structurel comprenant un caisson de base, un panneau d'aspect et une doublure de rigidification formant un support audit panneau d'aspect.

L'invention concerne également un véhicule comportant un tel élément structurel.

### Etat de la technique

Classiquement, un véhicule du type d'une automobile comprend une caisse sur laquelle sont montés divers éléments structurels qui, selon leur conception, ont une incidence directe quant à la résistance de la caisse à la déformation. Un ouvrant du type d'une porte latérale est un élément structurel conçu par l'assemblage d'un caisson avec un panneau visible de l'extérieur. Le caisson est conçu afin de participer à la rigidité de la caisse lors d'un choc, tandis que le panneau est une pièce d'aspect qui contribue au design du véhicule.

A ce jour et en grande majorité, de tels ouvrants sont réalisés à partir de tôles d'acier ou d'aluminium mises en forme par emboutissage, mais dans une tendance d'allègement de la masse du véhicule et de personnalisation, il est recouru à des matériaux plastiques pour former le panneau, lequel devient personnalisable tant dans sa forme que sa couleur. Il devient en effet possible de créer par moulage des reliefs d'aspect mais aussi de choisir une couleur du panneau, de sorte que la personnalisation devient facilement accessible et économiquement réalisable à grande échelle. Toutefois au regard de sa tenue à la déformation, le panneau plastique doit être associé à une doublure de rigidification qui, toujours dans une volonté d'allègement, est de préférence réalisée à partir d'un matériau plastique. A titre d'exemple, il est d'usage de fabriquer une telle doublure de rigidification à partir d'un matériau composite qui peut être un thermoplastique du type d'un polypropylène expansé. Après l'assemblage du panneau avec la doublure de rigidification, l'ensemble ainsi obtenu est fixé de manière démontable audit caisson de porte, comme cela est décrit dans le document FR3014811. Afin d'éviter la déformation du panneau, l'intégralité de sa face interne est recouverte de la doublure de rigidification.

De manière avantageuse, le montage réversible de l'ensemble constitué d'un panneau de porte et de sa doublure de rigidification sur le caisson permet en cas de choc ou en cas de nouvelle personnalisation, de retirer l'ensemble hors du caisson afin de le remplacer. Le montage réversible de l'ensemble sur le caisson est réalisé par vissage ou par tout autre moyen d'assemblage équivalent.

Toutefois, bien qu'une telle architecture de l'élément structurel présente de nombreux avantages, la personnalisation de la porte latérale permise ne va pas assez loin en termes d'aspects ou de fonctionnalité. En effet, de nouvelles personnalisations dudit élément structurel visent l'intégration d'équipements techniques qui peuvent être d'ordre fonctionnel ou esthétique et dont la maintenance requiert une attention particulière. Quand bien même la conception des éléments structurels connus permet une personnalisation extérieure de l'élément structurel, comme cela est décrit dans le document JP S58 113522 U qui reprend les caractéristiques du préambule de la revendication 1, elle n'offre par contre aucune possibilité d'aménagement visant à intégrer tout type d'équipement technique additionnel.

### Objet de l'invention

L'invention a pour but de remédier à l'ensemble des inconvénients précités et a pour objet un élément structurel destiné à être assemblé à une caisse d'un véhicule, notamment du type d'une automobile, ledit élément structurel comprenant un caisson de base, un panneau d'aspect et une doublure de rigidification formant un support audit panneau d'aspect, qui puissent offrir une possibilité de personnalisation accrue, tout en étant simple et peu onéreux dans sa réalisation. L'élément structurel comprend un dispositif d'information agencé de manière réversible à la doublure par l'intermédiaire d'un module de support, la doublure de rigidification étant une interface structurelle commune à plusieurs variantes de réalisation dudit module de support.

L'invention se caractérise, plus particulièrement, par le fait que le module de support est intercalé entre panneau d'aspect et le caisson de base, en appui contre chacun d'eux.

L'élément structurel selon l'invention peut en outre comprendre les caractéristiques suivantes, considérées isolément ou en combinaison entre-elles :
- ledit module de support est réalisé en matière composite, de préférence en matériau thermoplastique du type polypropylène expansé ;
- la doublure de rigidification comprend au moins une ouverture conformée pour recevoir en force ledit module de support de telle sorte qu'une face externe dudit module s'étend à affleurement d'une face externe d'appui de la doublure de rigidification contre le panneau d'aspect ;
- le dispositif d'information comprend au moins une source lumineuse agencée dans ledit module de support ;
- le dispositif d'information comprend au moins un système de détection agencé dans ledit module de support ;
- le module de support comprend un moyen de préhension rendant apte son démontage hors de la doublure de rigidification ;
- ledit module de support comprend au moins une butée périphérique s'étend hors d'une face interne opposée à ladite face externe d'appui du panneau d'aspect, chaque butée formant un épaulement destiné à venir à recouvrement d'un bord périphérique de l'ouverture ménagé dans la doublure de rigidification ;
- le module de support s'étend sensiblement au droit d'au moins une zone translucide du panneau d'aspect.

L'invention a également trait à un véhicule comportant un élément structurel comportant au moins l'une quelconques des caractéristiques susmentionnées, qui soit simple, peu coûteux et rentable dans le cas d'une production à grande série.

### Description sommaire des dessins

D'autres avantages et caractéristiques ressortiront plus clairement de la description qui va suivre du mode particulier de réalisation de l'invention, donné à titre d'exemple non limitatif et représenté aux dessins annexés, dans lesquels :
- la figure 1 représente une vue en perspective éclatée d'une doublure de rigidification et d'un module de support constituant en partie un élément structurel rapporté, selon l'invention ;
- la figure 2 représente, selon une vue en coupe transversale, le module de support de la figure 1 assemblé à la doublure de rigidification, selon l'invention ;
- la figure 3 représente une vue en perspective éclatée d'un élément structurel selon l'invention, la doublure de rigidification incorporant ledit module de support, selon l'assemblage de la figure 2.

### Description de modes particuliers de réalisation

Dans la description qui va suivre, des éléments identiques ou analogues porteront les mêmes chiffres et nombres de référence. Les expressions telles que « arrière » et « avant », « gauche » et « droite », « supérieur » et « inférieur » et les orientations « longitudinale », « transversale » et « verticale » seront définies en référence au trièdre X, Y, Z et aux définitions données dans la description. Notamment, la direction longitudinale X correspond au sens de déplacement en marche avant d'un véhicule automobile (non représenté sur les figures).

En référence aux figures, l'élément 1 structurel selon l'invention a pour objectif de proposer une nouvelle méthode de fabrication et d'assemblage d'un panneau d'aspect afin de rendre possible une personnalisation plus forte pour le client, tout en maintenant un niveau de coût de fabrication acceptable, tout du moins financièrement rentable. Pour ce faire, la performance économique de la personnalisation est améliorée par le recours à une communauté de pièces, c'est-à-dire à des pièces standards, quelle que soit la personnalisation choisie par le client.

En d'autres termes, les pièces visibles et personnalisables sont agencées sur des pièces communes ou standard en ce sens que ces dernières forment des interfaces de liaison à plusieurs variantes possibles de réalisation des pièces personnalisées. Cela tend avantageusement à réduire la diversité des pièces pour la fabrication d'un élément structurel embarqué sur un véhicule mais aussi durant la vie du véhicule où l'aspect esthétique du véhicule peut être modifié, tout comme les équipements embarqués.

L'élément structurel de l'invention est remarquable en ce qu'il permet une personnalisation qui touche autant une pièce d'aspect qui est un élément de carrosserie visible de l'extérieur du véhicule, qu'un dispositif d'information, qui sera détaillé plus en aval dans la description suivante et dont le fonctionnement peut avoir un effet sur le rendu esthétique du véhicule ou sur fonction technique réalisée.

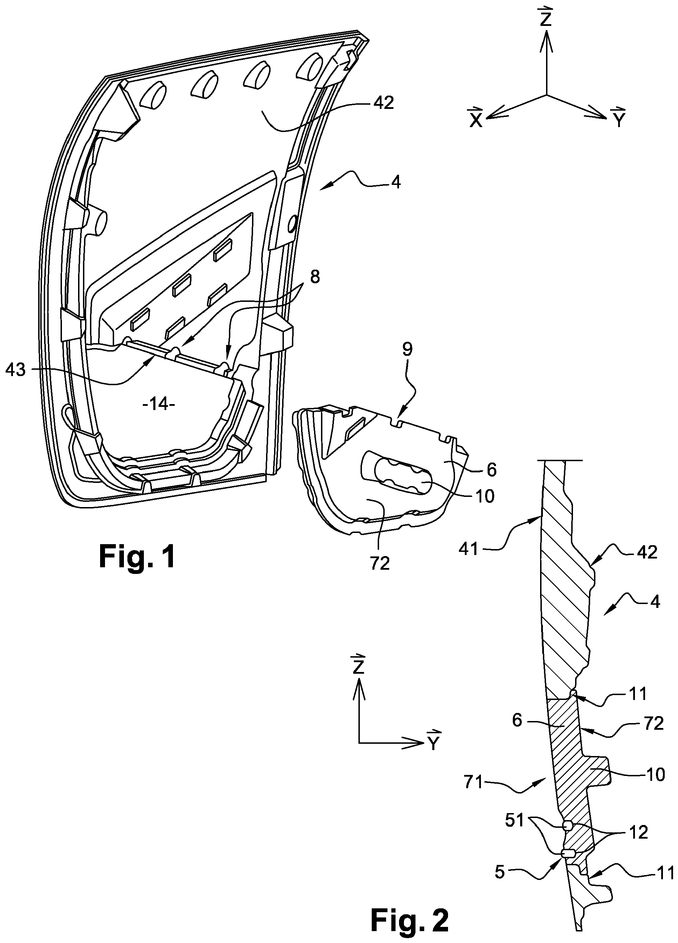

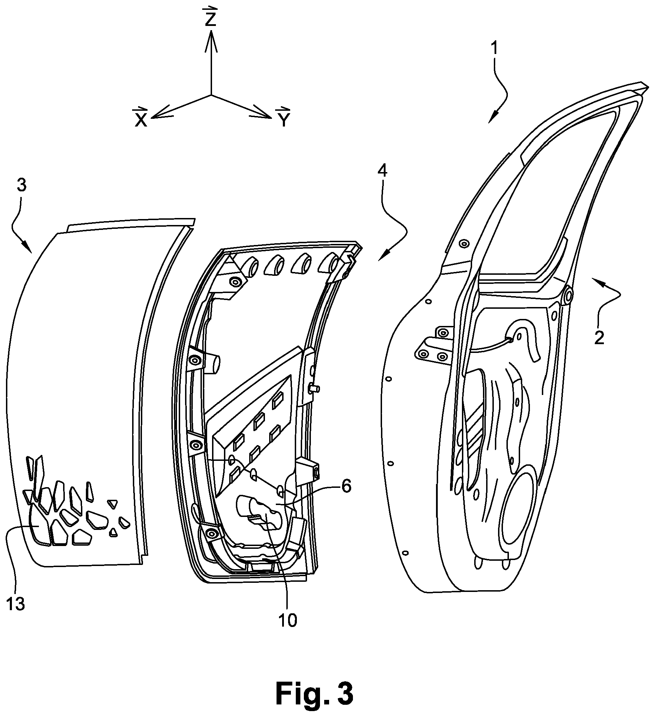

Sur la figure 1, seule une doublure 4 de rigidification est représentée. Dans le mode de réalisation illustré, la doublure 4 de rigidification est destinée à être montée sur un caisson de base et à être recouverte par un panneau d'aspect. Le caisson et le panneau d'aspect sont visibles sur la figure 3 qui représente les divers éléments constitutifs d'une porte latérale destinée à être montée à rotation sur la caisse d'un véhicule.

La doublure 4 de rigidification est réalisée à partir d'un matériau composite, facilement mise en forme par moulage.

La doublure 4 de rigidification peut être réalisée à partir d'un matériau intégralement recyclable, tel que par exemple du polypropylène expansé.

Le recours à un tel matériau fait de la doublure 4 de rigidification un support résistant à la déformation sur lequel est disposé le panneau 3 d'aspect.

Le panneau 3 d'aspect peut être réalisé en matière plastique par moulage.

Le doublure 4 de rigidification est réalisée par moulage et comprend des brides de fixation qui permettent sa fixation au caisson 2 de base.

De préférence, la doublure 4 de rigidification est fixée au caisson 2 par des moyens de fixation réversible agencés au niveau des brides de fixation, lesquels moyens peuvent comprendre des vis de serrage, des clips de fixation rapide ou des rivets, ou tout autre moyen de fixation équivalent permettant le démontage de la doublure 4 hors du caisson 2 sans destruction.

Le caisson 2 est quant à lui réalisé par emboutissage d'une pièce métallique, par exemple d'une plaque en aluminium ou en acier. Le caisson 2 est conformé afin de participer à la tenue de caisse à la déformation, en cas notamment de choc frontal du véhicule contre un obstacle. Un tel caisson 2 contribue à protéger la cellule de sécurité des passagers, une telle cellule de sécurité étant formée par la caisse du véhicule.

Le panneau 3 d'aspect est dans sa globalité opaque sauf en ce qui concerne une zone 13 translucide, visible ici en partie inférieure du panneau 3.

Le panneau 3 d'aspect présente un galbe sensiblement identique à celui de la face extérieure 41 de la doublure 4 de rigidification contre laquelle il est assemblé par collage.

La doublure 4 présente une ouverture 14 qui s'étend sensiblement au droit de la zone 13 translucide.

L'ouverture 14 est destinée à être obstruée par un module 6 de support d'un dispositif 5 d'information.

L'élément 1 structurel comprend donc un dispositif 5 d'information qui est agencé de manière réversible à la doublure 4 de rigidification par l'intermédiaire d'un module 6 de support qui va être présenté plus en détails dans ce qui suit.

Le module 6 de support est une pièce rapportée qui est assujettie à la forme de l'ouverture 14 ainsi qu'à l'épaisseur de la doublure 4 pour sa fabrication.

Au jeu de montage près, ledit module 6 de support est de forme complémentaire à celle de l'ouverture 14 de telle sorte que le module 6 de support est un bloc réalisé d'un seul tenant, de préférence par moulage d'un matériau composite, préférentiellement d'un matériau à base de polypropylène expansé.

Ledit module 6 de support comprend une face externe 71 dont le moulage est assujettie au dispositif 5 d'information.

Le dispositif 5 d'information peut être du type d'une source lumineuse 51, tel qu'un guide lumière qui a pour vocation de créer une ambiance lumineuse visible de l'extérieur du véhicule.

Pour ce faire, un tel guide lumière s'étend le long dudit moyen 6 de support, plus particulièrement dans au moins une rainure 12 ménagée sur la face 71 externe dudit moyen 6 de support.

Selon une variante de réalisation non représentée, le dispositif 5 d'information peut comprendre au moins un système de détection qui est agencé dans ledit moyen 6 de support. Un tel système de détection peut comprendre un capteur, une caméra ou un radar, relié électriquement à un module d'analyse des signaux afin d'informer le conducteur de l'environnement dans lequel évolue le véhicule.

Le dispositif 5 d'information peut être de nature à émettre un signal, tel un éclairage lumineux rendu visible de l'extérieur du véhicule, soit de nature à recevoir une information, telle un environnement extérieur analysé par une caméra ou un capteur.

Le module 6 est assemblé à la doublure 4 de manière subséquente à l'arrangement du panneau 3 d'aspect à la doublure 4 de rigidification.

Comme cela est rendu visible sur la figure 2, la face extérieure 71 du module 6 est contigüe à la face 41 extérieur de la doublure 4. Cela permet de conférer à la doublure 4, préalablement équipée du module 6, des lignes de galbe continues.

Afin de garantir une position correcte du module 6 sur la doublure 4, c'est-à-dire un montage à affleurement du module 6 sur la doublure 4, le module 6 comprend au niveau de sa face interne 72 une butée 11. La butée 11 forme au moins un épaulement périphérique au module 6 dont l'épaisseur est conformé selon l'épaisseur de la doublure 4.

Le montage du module 6 peut s'effectuer en force dans l'embrasure de la doublure 4.

Selon un mode de réalisation non représenté, le module 6 est maintenu solidaire de la doublure 4 par un moyen de fixation réversible, tel que des vis de serrage, des clips de fixation rapide, ou bien des rivets ou tout autre moyen de fixation équivalent.

Selon une variante de réalisation, le module 6 est fixé par vissage sur la doublure 4 de sorte que son démontage s'effectue par une étape préalable de dévissage.

Le démontage du module 6 est rendu possible par des moyens de préhension appropriés qui vont être à présents détaillés.

Selon un mode préféré de réalisation, de tels moyens de préhension sont formés par plusieurs évidements 8 ménagées en périphérie du bord 43 de l'ouverture 14.

Ces moyens de préhension peuvent aussi comprendre des échancrures 9 pratiquées sur le bord périphérique du module 6 lui-même.

De tels moyens de préhension rendent possible l'extraction manuelle du module 6 hors de l'embrasure de la doublure 4, de sorte que la maintenance du dispositif 5 d'information puisse être réalisée aisément.

Comme cela est en outre rendu visible sur les figures, de tels moyens de préhension peuvent aussi comprendre une poignée 10 réalisée en saillie transversale hors de la face 72 interne. Quand bien même une telle poignée 10 puisse réaliser le retrait du module 6 hors de la doublure 4, la poignée 10 permet avant tout un pré-positionnement du module 6 dans une orientation angulairement adéquate à l'ouverture 14 de telle sorte que son emmanchement en force dans l'embrasure de la doublure 4 de rigidification puisse être réalisé dans détérioration de leurs bords périphériques respectifs.

La telle butée peut s'étendre sur l'intégralité du pourtour du module 6 afin de venir à recouvrement du bord 43 périphérique de l'ouverture 14. Avantageusement un tel agencement permet une répartition homogène des efforts de montage du module 6 sur la doublure 4 de rigidification. De tels efforts sont issus de l'assemblage de la doublure 4 sur le caisson 2 de base, durant lequel la poignée 10 vient en contact contre le caisson. Du fait des dispersions d'assemblage et de fabrication, le module 6 exerce alors un effort d'intensité variable sur le bord 43 périphérique de la doublure 4 qui le reçoit.

En outre, le bord 43 périphérique de l'ouverture 14 peut présenter, selon une coupe transversale, des sections coniques qui tendent à centrer le module 6 sur l'ouverture 14 lorsque le module 6 est engagé dans l'ouverture 14.

Lorsque la doublure 4 est assemblée au caisson 2, le module 6 est mutuellement en appui surfacique contre la face interne du panneau 3 d'aspect et la face externe du caisson par ses deux faces opposées. Contrairement à la doublure 4 qui est collée au panneau 3, le module 6 doit exercer une pression sur le panneau 3 d'aspect afin d'éviter tout effet de vibration lors du fonctionnement du véhicule. Pour ce faire, l'épaisseur du module 6 est assujettie à l'agencement de la doublure 4 sur le caisson 2 de telle sorte que l'effort d'appui empêche les vibrations du panneau 3 d'aspect tout en préservant son galbe, sans déformation localisée.

Comme cela est rendu visible sur la figure 2, la face 71 extérieure du module 6 permet un montage réversible du dispositif 5 d'information afin d'en permettre sa maintenance. A cet effet, la face 71 extérieure comprend une rainure dans laquelle est monté un guide lumière. Ici, la rainure est sensiblement de forme complémentaire à celle du guide lumière, par exemple une section en demi-arc de cercle de rayon identique à celui du guide lumière cylindrique de sorte que ce dernier est rapporté et maintenu dans la rainure par emmanchement.

Dans le mode de réalisation non représenté, le dispositif d'information peut être du type d'un capteur ou d'une caméra monté dans un logement dédié qui a été obtenu par moulage du module 6 de support. Le moulage dudit module de support permet d'adapter aisément la géométrie de l'évidement dans lequel sera monté le dispositif d'information, ce qui facilite d'autant son intégration.

Bien entendu, eu regard de la facilité de conception du module 6, il devient possible de personnaliser la zone 13 translucide par plusieurs des dispositifs 5 mentionnés ci-dessus.

La doublure 4 de rigidification est un support à plusieurs variantes de réalisation du module 6 interchangeables en cours de vie du véhicule ou en après-vente.

Sur la figure 3, une partie inférieure du panneau 3 d'aspect comprend une zone 13 translucide, ici représentée par une multitude de fenêtres translucides au travers de laquelle la lumière émise par le guide lumière 51 peut être rendu visible de l'extérieur du véhicule. Chaque fenêtre présente une géométrie différente aux autres fenêtres, chaque fenêtre étant ici à titre d'exemple de géométrie polygonale. Les fenêtres sont aléatoirement réparties dans la zone 13 translucide afin de créer un panneau 3 d'aspect pour d'un éclairage d'intensité lumineuse variable.

Chaque fenêtre peut être réalisée lors du moulage du panneau 3 d'aspect selon une injection d'un matériau plastique présentant en tout ou partie au moins une zone translucide.

De préférence, un tel panneau 3 est réalisé par thermoformage d'un matériau du type polycarbonate.

Le panneau 3 translucide peut comprendre au moins une zone dépolie ayant pour effet d'opacifier le panneau localement.

Chaque fenêtre translucide peut également comprendre des zones rétroéclairées obtenues par exemple par sérigraphie. Chaque zone rétroéclairée permet d'obtenir une diffusion localisée d'une source lumineuse qui peut être indépendante de la forme de la fenêtre translucide. A titre d'exemple, la sérigraphie est appliquée en périphérie de chaque fenêtre translucide.

Alternativement, le panneau 3 peut être obtenu par le thermoformage d'une autre matière plastique, tel qu'un Acryloitrile Butadiène Styrène ou un Polyméthacrylate, ayant respectivement pour acronyme ABS et PPMA.

Selon une variante de réalisation, le panneau 3 est thermoformé puis peint en partie afin de le rendre opaque. Les fenêtres translucides sont des zones non peintes obtenues par l'application au pochoir de la peinture sur le panneau.

L'invention s'applique à tout type d'élément structurel (porte latérale, hayon, capot, aile, etc.) d'un véhicule automobile comportant un caisson de base et un panneau interchangeable. Plus particulièrement, l'invention s'applique à tout type de véhicule automobile à moyen ou grand volume de production et dont la structure de caisse cherche à imaginer des parties du véhicule « variables » permettant de changer en partie de type de carrosserie, d'usage du véhicule selon les désirs du client, à l'achat voire en cours de vie du produit, donc avec des volumes de pièces beaucoup plus faibles, mais à un coût acceptable.

Pour cette raison, l'invention a aussi trait à un véhicule équipé d'un tel élément structurel.

## Revendications

1. Elément structurel (1) destiné à être assemblé à une caisse d'un véhicule, notamment du type d'une automobile, ledit élément structurel (1) comprenant un caisson (2) de base, un panneau (3) d'aspect et une doublure (4) de rigidification formant un support audit panneau d'aspect, l'élément structurel (1) comprenant un dispositif (5) d'information agencé de manière réversible à la doublure (4) par l'intermédiaire d'un module (6) de support, la doublure (4) de rigidification étant une interface structurelle commune à plusieurs variantes de réalisation dudit module (6) de support, **caractérisé en ce que** le module (6) de support est intercalé entre le panneau (3) d'aspect et le caisson (2) de base, en appui contre chacun d'eux.

2. Elément (1) selon la revendication précédente, **caractérisé en ce que** ledit module (6) de support est réalisé en matière composite, de préférence en matériau thermoplastique du type polypropylène expansé.

3. Elément (1) selon la revendication précédente, **caractérisé en ce que** la doublure (4) de rigidification comprend au moins une ouverture (14) conformée pour recevoir en force ledit module (6) de support de telle sorte qu'une face externe (71) dudit module s'étend à affleurement d'une face externe (41) d'appui de la doublure (4) de rigidification contre le panneau (3) d'aspect.

4. Elément (1) selon l'une quelconque des revendications précédentes, **caractérisé en ce que le** dispositif (5) d'information comprend au moins une source lumineuse (51) agencée dans ledit module (6) de support.

5. Elément (1) selon l'une quelconque des revendications 1 à 4, **caractérisé en ce que le** dispositif (5) d'information comprend au moins un système de détection agencé dans ledit module (6) de support.

6. Elément (1) selon l'une quelconque des revendications précédentes, **caractérisé en ce que** le module (6) de support comprend un moyen de préhension (10) rendant apte son démontage hors de la doublure (4) de rigidification.

7. Elément (1) selon la revendication précédente, **caractérisé en ce que** ledit module (6) de support comprend au moins une butée (11) périphérique s'étend hors d'une face interne (72) opposée à ladite face externe (71) d'appui du panneau (3) d'aspect, chaque butée (11) formant un épaulement destiné à venir à recouvrement d'un bord périphérique (43) de l'ouverture (14) ménagé dans la doublure (4) de rigidification.

8. Elément (1) selon l'une quelconque des revendications précédentes, **caractérisé en ce que** le module (6) de support s'étend sensiblement au droit d'au moins une zone translucide (13) du panneau (3) d'aspect.

9. Véhicule **caractérisé en ce qu'**il comprend un élément (1) structurel conforme à l'une quelconque des revendications 1 à 8.

## Patentansprüche

1. Strukturelement (1), das dazu bestimmt ist, an einer Karosserie eines Fahrzeugs, insbesondere von der Art eines Kraftfahrzeugs, montiert zu werden, wobei das Strukturelement (1) ein Grundgehäuse (2), eine Verkleidungstafel (3) und eine Versteifungsauskleidung (4), die einen Träger für die Verkleidungstafel bildet, umfasst, wobei das Strukturelement (1) eine Informationsvorrichtung (5) umfasst, die an der Auskleidung (4) über ein Trägermodul (6) reversibel angeordnet ist, wobei die Versteifungsauskleidung (4) eine strukturelle Schnittstelle hat, die mehreren Ausführungsvarianten des Trägermoduls (6) gemein ist, **dadurch gekennzeichnet, dass** das Trägermodul (6) zwischen der Verkleidungstafel (3) und dem Grundgehäuse (2), an jedem von ihnen anliegend, eingefügt ist.

2. Element (1) nach dem vorhergehenden Anspruch, **dadurch gekennzeichnet, dass** das Trägermodul (6) aus Verbundmaterial, bevorzugt aus thermoplastischem Material wie geschäumtem Polypropylen, ausgeführt ist.

3. Element (1) nach dem vorhergehenden Anspruch, **dadurch gekennzeichnet, dass** die Versteifungsauskleidung (4) mindestens eine Öffnung (14) umfasst, die so ausgebildet ist, dass sie das eingedrückte Trägermodul (6) derart aufnimmt, dass sich eine Außenseite (71) des Moduls bündig mit einer Außenanlageseite (41) der Versteifungsauskleidung (4) an der Verkleidungstafel (3) erstreckt.

4. Element (1) nach einem der vorhergehenden Ansprüche, **dadurch gekennzeichnet, dass** die Informationsvorrichtung (5) mindestens eine Lichtquelle (51) umfasst, die in dem Trägermodul (6) angeordnet ist.

5. Element (1) nach einem der Ansprüche 1 bis 4, **dadurch gekennzeichnet, dass** die Informationsvorrichtung (5) mindestens ein Detektionssystem umfasst, das in dem Trägermodul (6) angeordnet ist.

6. Element (1) nach einem der vorhergehenden Ansprüche, **dadurch gekennzeichnet, dass** das Trägermodul (6) ein Greifmittel (10) umfasst, das seine Demontage aus der Versteifungsauskleidung (4) erleichtert.

7. Element (1) nach dem vorhergehenden Anspruch, **dadurch gekennzeichnet, dass** das Trägermodul (6) mindestens einen Umfangsanschlag (11) umfasst, der sich aus einer Innenseite (72) heraus erstreckt, die entgegengesetzt zu der Außenanlageseite (71) der Verkleidungstafel (3) erstreckt, wobei jeder Anschlag (11) eine Schulter bildet, die dazu bestimmt ist, einen Umfangsrand (43) der Öffnung (14), die in der Versteifungsauskleidung (4) ausgebildet ist, abzudecken.

8. Element (1) nach einem der vorhergehenden Ansprüche, **dadurch gekennzeichnet, dass** sich das Trägermodul (6) im Wesentlichen direkt unter mindestens einer durchscheinenden Zone (13) der Verkleidungstafel (3) erstreckt.

9. Fahrzeug, **dadurch gekennzeichnet, dass** es ein Strukturelement (1) nach einem der Ansprüche 1 bis 8 umfasst.

## Claims

1. Structural element (1) intended to be assembled with a body shell of a vehicle, notably of motor vehicle type, said structural element (1) comprising a base shell (2), a trim panel (3) and a strengthening lining (4) forming a support for said trim panel, the structural element (1) comprising an information device (5) arranged reversibly on the lining (4) via a support module (6), the strengthening lining (4) being a structural interface common to several production variants of said support module (6), **characterized in that** the support module (6) is inserted between trim panel (3) and the base shell (2), bearing against each of them.

2. Element (1) according to the preceding claim, **characterized in that** said support module (6) is produced in composite material, preferably in thermoplastic material of expanded polypropylene type.

3. Element (1) according to the preceding claim, **characterized in that** the strengthening lining (4) comprises at least one opening (14) shaped to receive, by force, said support module (6) in such a way that an outer face (71) of said module extends flush with an outer bearing face (41) of the strengthening lining (4) against the trim panel (3).

4. Element (1) according to any one of the preceding claims, **characterized in that** the information device (5) comprises at least one light source (51) arranged in said support module (6).

5. Element (1) according to any one of Claims 1 to 4, **characterized in that** the information device (5) comprises at least one detection system arranged in said support module (6).

6. Element (1) according to any one of the preceding claims, **characterized in that** the support module (6) comprises a gripping means (10) making it suitable for removal from the strengthening lining (4).

7. Element (1) according to the preceding claim, **characterized in that** said support module (6) comprises at least one peripheral abutment (11) which extends out of an inner face (72) opposite said outer bearing face (71) of the trim panel (3), each abutment (11) forming a shoulder intended to come to overlap a peripheral edge (43) of the opening (14) formed in the strengthening lining (4).

8. Element (1) according to any one of the preceding claims, **characterized in that** the support module (6) extends substantially in line with at least one translucent zone (13) of the trim panel (3).

9. Vehicle, **characterized in that** is comprises a structural element (1) conforming to any one of Claims 1 to 8.
